# EUROPÄISCHE PATENTANMELDUNG

(11) **EP 1 898 208 A1**
(43) Veröffentlichungstag der Anmeldung: **12.03.2008**
(21) Anmeldenummer: 07017405.7
(22) Anmeldetag: 05.09.2007
(51) Int. Cl.: G01N 23/04

(54) **Röntgen-CT-Prüfanlage sowie CT-Verfahren zur Prüfung von Objekten**

(30) Priorität: 06.09.2006 DE 102006041850
(71) Anmelder: YXLON International X-Ray GmbH, 22419 Hamburg (DE)
(72) Erfinder: Münker, Martin, 58285 Gevelsberg (DE); Laakel, Faissal, 44801 Bochum (DE); Helling, Matthias, 44627 Herne (DE)
(74) Vertreter: DTS München

(57) **Zusammenfassung**

Die Erfindung betrifft eine Röntgen-CT-Prüfanlage mit einer Röntgenröhre 1 mit einem Fokus 2, die einen Fächerstrahl 3 oder einen Kegelstrahl erzeugt, der einen Detektor 4 in einem definierten Abstand zum Fokus 2 vollständig ausleuchtet, und mit einem Prüfschlitten zur Aufnahme eines zu prüfenden Objekts, der eine senkrecht zur Ebene des Fächerstrahles 3 bzw. zur Zentralachse 6 des Kegelstrahls rotierbare Rotationsachse 5 aufweist. Erfindungsgemäß ist vorgesehen, dass der Prüfschlitten an mindestens einem Messpunkt 15 festlegbar ist, wobei jeder dieser Messpunkte 15 so angeordnet ist, dass sich die Rotationsachse 5 auf einer Messlinie 9 befindet, die vom Fokus 2 ausgeht und einen Kippwinkel α mit der Zentralachse 6 des Fächerstrahls 3 bzw. des Kegelstrahls einschließt.

Darüber hinaus befasst sich die Erfindung mit einem CT-Verfahren zur Prüfung von Objekten, insbesondere unterschiedlicher Größe, mittels einer erfindungsgemäßen Röntgen-CT-Prüfanlage.

## Beschreibung

Die Erfindung befasst sich mit einer Röntgen-CT-Prüfanlage mit einer Röntgenröhre mit einem Fokus, die einen Fächerstrahl oder einen Kegelstrahl erzeugt, der einen Detektor in einem definierten Abstand zum Fokus vollständig ausleuchtet, und mit einem Prüfschlitten zur Aufnahme eines zu prüfenden Objekts, der eine senkrecht zur Ebene des Fächerstrahles bzw. zur Zentralachse des Kegelstrahls rotierbare Rotationsachse aufweist. Darüber hinaus befasst sich die Erfindung mit einem CT-Verfahren zur Prüfung von Objekten, insbesondere unterschiedlicher Größe, mittels einer vorgenannten Röntgen-CT-Prüfanlage.

In der industriellen Computertomographie (CT) sind zwei Prüfverfahren gängig. Zum einen handelt es sich um eine Translations-Rotations-Tomographie (2.Generation) und zum anderen um eine Fächerstrahl-Tomographie (3.Generation). In beiden Fällen wird vor einem Brennfleck, dem Fokus, einer Röntgenquelle ein Fächerstrahl ausgeblendet, der einen eindimensionalen Detektor vollständig ausleuchtet. Sowohl die Röntgenquelle als auch der Detektor sind ortsfest angeordnet. Zwischen ihnen wird ein zu prüfendes Objekt in den Fächerstrahl eingebracht, das um eine Achse senkrecht zur Ebene des Fächerstrahls rotiert wird, um eine Rekonstruktion des Objekts vornehmen zu können. Der Abstand zwischen Röntgenröhre und Detektor ist veränderlich, ebenso die Position des Objekts, das auf einem Drehteller angeordnet ist, so dass die geometrische Vergrößerung auf die jeweiligen Erfordernisse abgestimmt werden kann. Die einzelnen horizontalen Schichten des Objekts werden dadurch aufgenommen, dass das Objekt oder die Röntgenröhre und der Detektor schrittweise in ihrer Höhe geändert werden. Anstatt der Verwendung eines Fächerstrahls ist es auch möglich, einen Kegelstrahl zu verwenden und diesen auf einen zweidimensionalen Detektor zu projizieren. Dann kann - je nach Größe des Objekts - auf eine schichtweise Abtastung verzichtet werden.

Bei der Fächerstrahl-Tomographie wird ein vollständiger Messdatensatz dadurch erzeugt, dass das Prüfobjekt in der Schnittebene vollständig im Fächerstrahl liegt und Projektionen aus mindestens 180° plus Öffnungswinkel des Fächerstrahls aufgenommen werden. Dieses Verfahren ist schnell, jedoch bestimmt die Größe des Strahlenfächers die maximale Größe des in dieser Anordnung tomographierbaren Objekts. Diese Größe wird auch Messkreis genannt. Die Beziehung gilt auch in umgekehrter Richtung, d.h. damit ein größeres Objekt tomographiert werden kann, muss der Messkreis größer werden, also ein Fächerstrahl mit größerem Öffnungswinkel und somit auch ein größerer Detektor verwendet werden. Bei dieser Methode erfordern schon vergleichsweise kleine Objekte große Anlagen mit einem langen Detektor sowie einem großen Abstand zwischen Fokus und Detektor. Technische Beschränkungen resultieren hierbei aus dem maximalen Abstrahlwinkel der Strahlenquelle, der den Öffnungswinkel begrenzt, und der Baugröße des Detektors.

Wenn der Fächerstrahl nicht das gesamte Objekt überdeckt, so kann dieser Fächerstrahl synthetisch verbreitert werden, wahlweise durch seitliches Bewegen von Strahlenquelle und Detektor oder des Objekts. Hierbei handelt es sich um die Translations-Rotations-Tomographie. Allerdings muss hier abwechselnd eine lineare und rotative Bewegung erfolgen, was zeitaufwendig ist und zudem für die Querbewegung eine Linearachse erfordert, die über die gesamte Fahrstrecke die rechtwinklige Ausrichtung der Rotationsachse zur Ebene des Fächerstrahls mit einer hohen Genauigkeit sicherstellen muss.

Wird anstatt eines zweidimensionalen Fächerstrahls ein dreidimensionaler Kegelstrahl verwendet, wird das zur Verfügung stehende Prüfvolumen zwischen dem Fokus der Röntgenquelle und den Ecken des meist eckigen zweidimensionalen Flächendetektors bzw. der Randkontur eines eingesetzten Bildaufnahmegeräts aufgespannt. Ansonsten gelten in analoger Weise die obigen Ausführungen.

Bei einer typischen Größen- und Mengenverteilung von Prüfobjekten - es gibt häufig viele kleine und wenige große Objekte - ist es bislang nötig, eine Prüfanlage so auszulegen, dass die großen Objekte auf alle Fälle geprüft werden können. Daraus resultieren Nachteile hinsichtlich der Baugröße der gesamten Prüfanlage und hinsichtlich der erreichbaren Messzeit.

Aufgabe der Erfindung ist es, eine im Vergleich zur herkömmlichen Bauweise mechanisch vereinfachte, kompakte und schnelle Röntgen-CT-Prüfanlage zur Untersuchung von Objekten deutlich unterschiedlicher Größen zur Verfügung zu stellen. Hierzu soll auch ein Verfahren, mit dem eine solche Röntgen-CT-Prüfanlage betrieben wird, zur Verfügung gestellt werden.

Die Aufgabe wird durch eine Röntgen-CT-Prüfanlage mit den Merkmalen des Patentanspruchs 1 gelöst. Dadurch, dass der Prüfschlitten an Messpunkten festlegbar ist, die sich auf einer Messlinie befinden, ist eine einfache mechanische Bauweise der Vorrichtung gegeben. Durch die Ausrichtung der Messlinie auf einer Geraden, die durch den Fokus geht und einen Kippwinkel zur Zentralachse des Röntgenstrahls aufweist, können zu prüfende Objekte mit einer vorgegebenen Größe durch eine kleinerbauende Anlage überprüft werden, als dies mit einer Anlage gemäß dem Stand der Technik der Translations-Rotations-Tomographie und der Fächerstrahl-Tomographie der Fall ist. Dies ergibt sich daraus, dass der Abstand zwischen der Messlinie und einem der Randstrahlen des Fächerstrahls immer größer ist als von der Zentralachse zu dem jeweiligen Randstrahl. Erfindungsgemäß ist es möglich, dass nur ein einziger Messpunkt gegeben ist. Dadurch erhält man eine sehr einfache mechanische Ausgestaltung der Vorrichtung. Ebenso ist es jedoch auch erfindungsgemäß möglich, dass eine ganze Reihe von Messpunkten gegeben sind, in denen der Prüfschlitten festgelegt werden kann. Dadurch wird eine flexible Prüfanordnung geschaffen, mit der auch in sehr einfacher Art und Weise Objekte unterschiedlicher Größe einfach und schnell geprüft werden können.

Bevorzugt liegt der Kippwinkel zwischen der Zentralachse des Fächerstrahls bzw. des Kegelstrahls und der Messlinie zwischen 5° und 40°. Dadurch ist eine deutliche Erweiterung bezüglich der Größe von Messobjekten bei gleicher Bauhöhe gegeben; bzw. ist bei vorgegebener Objektgröße eine Verringerung der Bauhöhe der Röntgen-CT-Prüfanlage möglich. Besonders bevorzugt liegt der Kippwinkel bei 15°.

Eine besonders bevorzugte Ausführungsform der Erfindung sieht vor, dass die Messlinie senkrecht auf die Oberfläche des Detektors steht. In einer solchen Ausgestaltung ist es nicht nötig, eine geometrische Korrektur bei den akquirierten Messdaten vorzunehmen, da keine Verzerrung aus der Geometrie der Anlage erfolgt. Außerdem ist eine solche Anordnung sehr einfach zu realisieren.

Eine weitere vorteilhafte Weiterbildung der Erfindung sieht vor, dass der Detektor mit einer Antriebseinheit verbunden ist und senkrecht zur Messlinie innerhalb der Ebene des Fächerstrahls bzw. innerhalb der Ebene des Detektors bei einem Kegelstrahl verschiebbar ist. Dadurch ist es möglich, mit einfachem mechanischem Aufwand einen virtuellen Detektor zu kreieren, der größer ist als der real existierende Detektor. Bevorzugt trifft die Zentralachse den synthetisierten - virtuellen - Detektor zentral. Im Gegensatz zur herkömmlichen Messkreiserweiterung, die eine fest vorgegebene Detektorgröße aus mehreren, festen Positionen synthetisiert, kann hier über die freie Verschiebung des Detektors dessen gesamte Länge, und damit die Gesamtheit der gemessenen Daten, verlustfrei genutzt werden.

Eine andere bevorzugte Weiterbildung der Erfindung sieht vor, dass die Zentralachse des Fächerstrahls bzw. des Kegelstrahls, nicht jedoch die Messlinie, senkrecht auf die Oberfläche des Detektors steht. Dadurch erhält man auch den Vorteil - der oben schon beschrieben wurde -, dass entweder größere Objekte geprüft werden können bei einer vorgegebenen Baugröße der Anlage oder bei einer vorgegebenen Größe eines Objekts die Baugröße verringert werden kann, da der Abstand des Messpunktes zu einem der Randstrahlen größer ist als von der Zentralachse aus. In diesem Fall ist zwar eine maximale Zeilenlänge bei der vollen Nutzung des Ausstrahlwinkels der Röntgenröhre gewährleistet, allerdings muss eine geometrische Korrektur der akquirierten Daten in Kauf genommen werden.

Eine weitere vorteilhafte Weiterbildung der Erfindung sieht vor, dass der Prüfschlitten kontinuierlich an Messpunkten auf der Messlinie festlegbar ist. Dadurch ergibt sich die Möglichkeit, die Vergrößerung kontinuierlich zu variieren. Darüber hinaus wird auch eine große Bandbreite von Objektgrößen zugelassen, die alle ordnungsgemäß geprüft werden können.

Eine weitere vorteilhafte Weiterbildung der Erfindung sieht vor, dass die Messlinie körperlich durch eine Führungsschiene realisiert ist, an der der Prüfschlitten verfahrbar ist. Hierdurch erhält man eine sehr einfache mechanische Ausgestaltung, die gleichzeitig eine sehr exakte Positionierung des Prüfschlittens und somit der Rotationsachse erlaubt. Hierbei ist es zum einen möglich, dass der Prüfschlitten kontinuierlich - also an jeder Stelle der Prüflinie -, an einer Reihe von konkreten Stellen - also zur Prüfung von Objekten vorgegebener Größe - oder auch nur an einer einzigen Stelle festgelegt werden kann.

Eine weitere vorteilhafte Weiterbildung der Erfindung sieht vor, dass in jedem Messpunkt eine freie Rotation des Prüfschlittens mit darauf befestigtem, zu prüfendem Objekt gegeben ist. Dadurch werden auf alle Fälle alle für das CT-Verfahren nötigen Informationen bei der Prüfung des Objekts erhalten.

Eine weitere vorteilhafte Weiterbildung der Erfindung sieht vor, dass in jedem Messpunkt bei der Rotation des Objekts dieses immer innerhalb eines Randstrahls bleibt, der vom Fokus ausgeht und den Detektor an seinem Rand trifft. Dadurch wird ebenfalls gewährleistet, dass alle für die Prüfung nötigen Daten des Objekts akquiriert werden können, ohne dass eine Verschiebung des Detektors oder eine Bewegung der Rotationsachse senkrecht zur Messlinie nötig ist.

Darüber hinaus wird die Aufgabe auch durch ein CT-Verfahren mit den Merkmalen des Patentanspruchs 12 gelöst. Dadurch, dass die Positionierung des Objekts von seiner Größe abhängt, können kleine erste Objekte so positioniert werden, dass sie vollständig vom Fächerstrahl durchsetzt werden, was zu einer sehr schnellen Prüfung dieser kleinen ersten Objekte führt. Darüber hinaus können größere zweite Objekte, die nicht vollständig vom Fächerstrahl durchsetzt werden, nahe am Detektor positioniert werden und eine Fächerstrahl-Tomographie durchgeführt werden. Auch dies ist ein gegenüber der Translations-Rotations-Tomographie bedeutend schnelleres Verfahren. Außerdem können Objekte mittlerer Größe wahlweise mit geringer Vergrößerung (also detektornah) im Vollfächer und damit schnell geprüft werden oder aber etwas langsamer, dafür aber mit höherer Vergrößerung im Teil- oder Halbfächerverfahren. Erfindungsgemäß muss lediglich gewährleistet werden, dass bei den größeren zweiten Objekten die Positionierung der Rotationsachse so ist, dass der Messkreis niemals über die beiden Randstrahlen hinausragt. Dies führt gegenüber den bekannten Röntgen-CT-Verfahren zu einer Kostenersparnis. Es kann zumindest auch immer das günstige Teilfächerverfahren- falls das Objekt nicht sowieso schon vollständig im Strahlenfenster liegt - mit den angegebenen Vorteilen angewandt werden. Außerdem muss die Rotationsachse nur an der Stelle, an der sie positioniert wurde für eine Prüfung des Objekts möglichst exakt senkrecht zur Ebene des Fächerstrahls stehen. Unter einem Teilfächerverfahren wird im Rahmen dieser Anmeldung ein Verfahren verstanden, das anders als bei Halbdetektorverfahren, bei denen eine komplette Informationshälfte aus den Daten der anderen Seite generiert wird, nur bestimmte Bereiche synthetisch erzeugt, während die in der Mitte befindlichen Bereiche so gesehen "überlappend" gemessen werden: über das Verrechnen der Daten kann ein günstigeres Signal-Rausch-Verhältnis erzielt werden. Das ist dann von Interesse, wenn lediglich im Zentrum des Bildes - welches nicht zwangsweise das Zentrum des Teiles sein muss - eine hochgenaue Auswertung erfolgt.

Eine vorteilhafte Weiterbildung der Erfindung sieht vor, dass ein erstes Objekt so weit vom Fokus entfernt auf der Messlinie zur Prüfung angeordnet ist, dass es bei der gesamten Prüfung gerade nicht über den Fächerstrahl bzw. den Kegelmantelstrahl hinaussteht. Dadurch ist es möglich, mit der Fächerstrahl-Tomographie ein kleines erstes Objekt maximaler Größe zu tomographieren.

Eine weitere vorteilhafte Weiterbildung der Erfindung sieht vor, dass ein zweites Objekt so weit vom Fokus entfernt auf der Messlinie zur Prüfung angeordnet ist, dass es bei der gesamten Prüfung gerade nicht über die beiden Randstrahlen hinaussteht. Dadurch ist es möglich, dass mittels der Fächerstrahl-Tomographie ein möglichst großes zweites Objekt tomographiert werden kann.

Eine weitere vorteilhafte Weiterbildung der Erfindung sieht vor, dass der Detektor mittels der Antriebseinheit während der Messung von seiner einen Extremposition in seine andere Extremposition, bzw. in seine anderen Extrempositionen, verfahren wird. Wie oben schon zur Vorrichtung ausgeführt, wird dadurch eine Synthetisierung eines größeren Detektors erreicht, als der real existierende Detektor. Dadurch können entweder größere Prüfobjekte bei gleichbleibender Baugröße der Vorrichtung geprüft werden oder bei vorgegebener Größe des Objekts kann die Baugröße verringert werden.

Weitere Vorteile und Einzelheiten der Erfindung werden anhand der in den Figuren dargestellten, nachfolgend beschriebenen Ausführungsbeispiele erläutert. Dabei zeigen:
- Fig. 1: eine schematische Draufsicht auf ein erstes Ausführungsbeispiel einer erfindungsgemäßen Röntgen-CT-Prüfanlage, bei der die Prüflinie senkrecht auf die Oberfläche des Detektors steht, und
- Fig. 2: eine schematische Draufsicht auf ein zweites Ausführungsbeispiel einer erfindungsgemäßen RöntgenCT-Prüfanlage, bei der die Zentralachse des Röntgenstrahls senkrecht auf die Oberfläche des Detektors steht.

Im Folgenden wird hinsichtlich der beiden Ausführungsbeispiele davon ausgegangen, dass ein Fächerstrahl 3 vorliegt. Die Ausführungen gelten allerdings analog auch für einen Kegelstrahl, was sich dem Fachmann sofort erschließt, da er die unterschiedlichen Geometrien der Anlagen prinzipiell kennt und den Transfer von der erfindungsgemäßen Ausführungsform mit Fächerstrahl 3 auf den Kegelstrahl problemlos vornehmen kann.

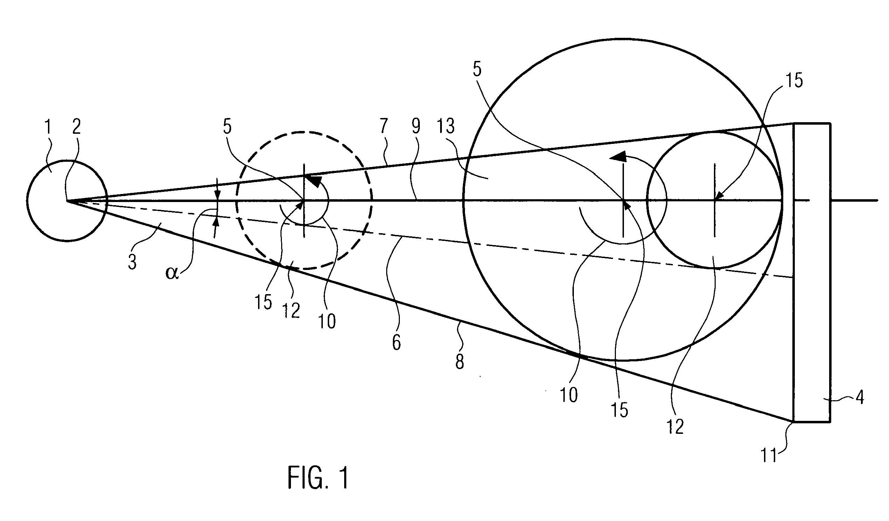

In Fig. 1 ist schematisch eine Draufsicht auf eine Röntgen-CT-Prüfanlage dargestellt. Eine Röntgenröhre 1 weist einen Fokus 2 auf, von dem ein Röntgenstrahl in Form eines Fächerstrahls 3 ausgeht. Dieser Fächerstrahl 3 trifft auf einen Detektor 4, der vollständig vom Fächerstrahl 3 ausgeleuchtet wird. Eine solche Anordnung ist aus der industriellen CT gut bekannt. Der Abstand zwischen Detektor 4 und Fokus 2 kann variiert werden, um eine möglichst gute Abbildungsgeometrie für ein zu prüfendes Objekt zu erreichen. Da durch den Fächerstrahl 3 nur eine dünne Scheibe in der Ebene des Fächerstrahls 3 des zu untersuchenden Objekts tomographiert werden kann, sind sowohl die Röntgenröhre 1 als auch der Detektor 4 in ihrer Höhe verfahrbar. Dabei wird schichtweise eine Durchleuchtung des zu prüfenden Objekts vorgenommen. Alternativ ist es auch möglich, das Objekt in seiner Höhe zu variieren oder eine Kombination aus beiden Verfahren.

Zwischen dem Fokus 2 und dem Detektor 4 ist ein Schlitten (nicht dargestellt) angeordnet, auf dem ein zu prüfendes Objekt (nicht dargestellt) festlegbar ist. Der Prüfschlitten rotiert um eine Rotationsachse 5, die senkrecht auf die Ebene des Fächerstrahls 3 steht. Dadurch werden Datensätze des Objekts unter verschiedenen Bestrahlungspfaden generiert. Aus diesen Datensätzen wird dann eine Rekonstruktion des zu prüfenden Objekts vorgenommen. Es handelt sich hierbei um eine zerstörungsfreie Analyse auf Fehler im zu untersuchenden Objekt, beispielsweise Gussfehler, oder um die Ermittlung geometrischer Eigenschaften.

Objekte verschiedener Größe weisen unterschiedlich große Messkreise 12, 13 auf. Ein Messkreis 12, 13 bestimmt sich zum einen aus der Form des Objekts und der Position der Rotationsachse 5, um welche das Objekt bei der Prüfung rotiert wird. Der Radius des Messkreises 12, 13 entspricht dabei dem größten Abstand, den ein beliebiger Punkt des Objekts zur Rotationsachse 5 aufweist. Bei "rotationssymmetrischen" Rädern entspricht dies dem Radius des Rades, wenn es so auf dem Prüfschlitten angebracht ist, dass sein Mittelpunkt mit der Rotationsachse 5 zusammenfällt.

Bislang war es möglich, mittels eines Fächerstrahl-Tomographieverfahrens Objekte zu prüfen, deren Messkreis 12 vollständig im Fächerstrahl 3 lag. Dadurch war eine starke Beschränkung hinsichtlich der größtmöglichen Objekte gegeben, da diese lediglich mit einer sehr geringen Vergrößerung aufgenommen werden konnten, da sie in unmittelbarer Nähe des Detektors 4 angeordnet sein mussten. Für kleinere Objekte mit kleinerem Messkreis 12 war es dagegen möglich, diese entlang einer zentralen Achse 6 innerhalb des Fächerstrahls 3 auch in einem größeren Abstand zum Detektor 4 zu positionieren.

Um Objekte mit größeren Messkreisen 13 zu tomographieren, war es bislang nötig, die oben beschriebene Translations-Rotations-Tomographie zu verwenden, was zeitaufwendig und technisch aufwendiger zu realisieren war. Eine andere Möglichkeit für solche großen Objekte war es, ein Teilfächerverfahren zu verwenden.

Die Erfindung eröffnet nunmehr die Möglichkeit, in derselben Röntgen-CT-Prüfanlage sowohl eine Fächerstrahl-Tomographie als auch ein Teilfächerverfahren durchzuführen. Dadurch ist es möglich, das geeignete Verfahren in Abhängigkeit von der Größe des Objekts und somit seines Messkreises 12, 13 jeweils individuell festzulegen.

Um eine möglichst schnelle Messung zu erreichen, wird bei kleinen Objekten mit erstem Messkreis 12, der vollständig im Fächerstrahls 3 liegt, regelmäßig eine Fächerstrahl-Tomographie durchgeführt. Allerdings kann bei größeren solcher Objekte mit erstem Messkreis 12 auch ein Teilfächerverfahren durchgeführt werden, wenn die geometrischen Abbildungsvoraussetzungen dann im jeweiligen Anwendungsfall verbessert werden können. Dies ergibt sich daraus, dass bei einem Teilfächerverfahren ein Objekt mit vorgegebenem Messkreis 12, 13 näher am Fokus 2 angeordnet werden kann und trotzdem eine zuverlässige Durchleuchtung erfolgt.

Durch die Verkippung der Messlinie 9 gegenüber der Zentralachse 6 um den Kippwinkel α trifft die Messlinie 9 - bzw. ihre virtuelle Verlängerung - den Detektor 4 nicht zentral. Dies bedeutet, dass eine Fächerstrahl-Tomographie nur für kleinere Objekte durchgeführt werden kann, als wenn die Prüflinie 9 entlang der Zentralachse 6 verlaufen würde. Aus Fig. 1 wird dies dadurch deutlich, dass zwei Messpunkte 15 für Objekte mit einem gleichgroßen ersten Messkreis 12 dargestellt sind. Beim linken Messpunkt 15 liegt die Rotationsachse 5 so nahe am Fokus 2, dass der erste Messkreis 12 nicht vollständig im Fächerstrahl 3 liegt. An diesem Messpunkt 15 ist somit lediglich ein Teilfächerverfahren durch Rotation 10 des Objekts um die Rotationsachse 5 möglich. Dagegen ist am rechten Messpunkt 15 für denselben Messkreis 12 dieser vollständig vom Fächerstrahl 3 überdeckt. Somit kann hier eine Fächerstrahl-Tomographie durchgeführt werden. Diese ist schneller, jedoch ist die Vergrößerung in dem linken Messpunkt 15 größer, so dass die jeweils benötigte Methode gewählt werden kann.

Für ein Objekt mit einem größeren, zweiten Messkreis 13 wird das Teilfächerverfahren angewandt. Der Messpunkt 15 ist dabei so gewählt, dass er bei einer Rotation 10 um die Rotationsachse 5 bis knapp an die Oberfläche des Detektors 4 heranreicht. Dadurch wird der größtmögliche zweite Messkreis 13 ausgeschöpft.

Für jeden Messkreis 12, 13 ist es neben der nötigen freien Rotierbarkeit gegenüber dem Detektor 4 - und somit einem genügenden Abstand des Messpunktes 15 von diesem - auch nötig, dass er nicht über beide Randstrahlen 7, 8 hinausragt. Ansonsten ist das Teilfächerverfahren nicht anwendbar, sondern es müsste eine Verschiebung des Messpunktes 15 senkrecht zur Messlinie 9 - gemäß der Translations-Rotations-Tomographie - durchgeführt werden. Dies würde jedoch zu einem erheblichen mechanischen Mehraufwand für die Vorrichtung führen.

Die erfindungsgemäße Vorrichtung gemäß Fig. 1 ist im Ergebnis also sehr gut geeignet, um verschieden große Objekte - die sogar sehr stark in ihrer Größe variieren können - in ein und derselben Vorrichtung zu prüfen. Während des Messvorgangs ist für keine der unterschiedlich großen Objekte eine Linearbewegung erforderlich, sondern lediglich die Rotation 10 um die Rotationsachse 5. Dadurch wird erheblich Zeit eingespart.

Eine Vereinfachung der Mechanik ist dadurch gegeben, dass die Objektaufnahme jeweils an Messpunkten 15 auf der Messlinie 9 erfolgt und sich der Schlitten mit lediglich einem Freiheitsgrad bewegt. Es ist somit keine lineare Scannachse nötig. Über die Position der Rotationsachse 5 auf der Messlinie 9 können die Abbildungsverhältnisse hinsichtlich der Auflösung optimiert werden. Somit ist es insbesondere möglich, ein Objekt mittlerer Größe sowohl bei geringer Vergrößerung - wie dies in der rechten Position des ersten Messkreises 12 dargestellt ist - als auch bei hoher Vergrößerung - im links dargestellten ersten Messkreis 12 gemäß dem Teilfächerverfahren zu tomographieren.

Wenn die Anlage immer gleiche, vorgegebene Objekte prüfen soll, kann aus deren Größen- und Häufigkeitsverteilung die Länge des Detektors 4 und seine seitliche Verschiebung - die sich aufgrund der Verkippung um den Kippwinkel α zur Zentralachse 6 ergibt - hinsichtlich der Bildfeldgröße und Messzeit optimiert werden. Durch die senkrechte Ausrichtung der Messlinie 9 zum Detektor 4 ist keine geometrische Korrektur des Zeilenprofils nötig.

Die erfindungsgemäße Vorrichtung kann in einer "abgespeckten Version" auch so ausgestaltet sein, dass lediglich eine Festlegung der Rotationsachse 5 an diskreten Messpunkten 15 auf der virtuell vorhandenen Messlinie 9 möglich ist. Ein Verfahren des Prüfschlittens entlang dieser virtuellen Messlinie 9 ist dann nicht möglich. Dadurch wird eine noch einfachere Mechanik und somit geringere Kosten erreicht.

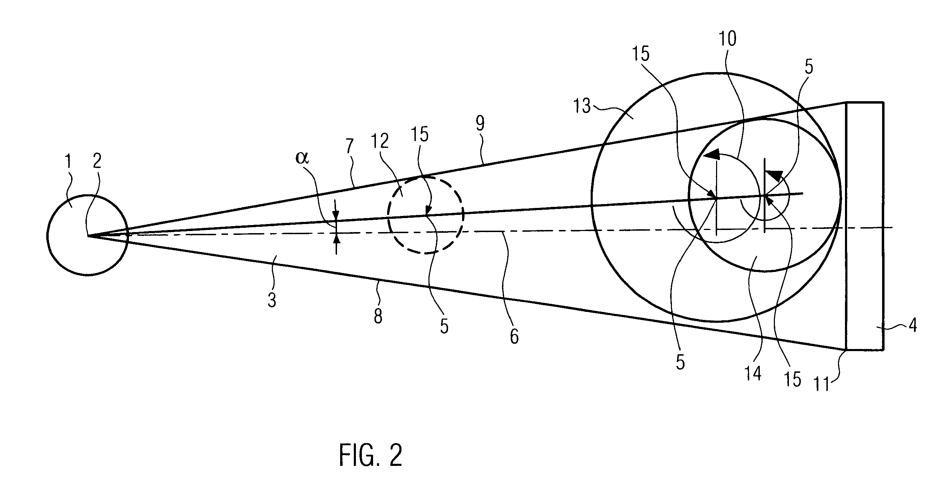

Die in Fig. 2 dargestellte weitere Ausführungsform einer erfindungsgemäßen Röntgen-CT-Prüfanlage ist prinzipiell sehr ähnlich zu derjenigen in Fig. 1 aufgebaut. Im Folgenden wird deswegen nur auf die Unterschiede zu dem ersten Ausführungsbeispiel der Fig. 1 näher eingegangen. Identische oder gleich wirkende Teile sind mit denselben Bezugszeichen versehen.

Der Hauptunterschied zwischen dem ersten Ausführungsbeispiel der Fig. 1 und dem zweiten Ausführungsbeispiel der Fig. 2 liegt darin, dass die Zentralachse 6 des Fächerstrahls 3 senkrecht auf die Oberfläche des Detektors 4 steht und nicht mehr die Messlinie 9. Durch die auch hier gegebene Verkippung der Messlinie 9 gegenüber der Zentralachse 6 um den Kippwinkel α erhält man somit bei den bei der Prüfung akquirierten Daten des Objekts eine winkelabhängige Korrektur des Zeilenprofils für den scheinbar schräg stehenden Detektor 4.

Der Kippwinkel α kann prinzipiell beliebig gewählt werden, wobei sich der optimale Kippwinkel α aus der Größen- und Häufigkeitsverteilung der zu prüfenden Objekte in Verbindung mit der Größe des Detektors und des Abstandes zwischen Fokus 2 und Detektor 4 errechnet. Durch den so gewählten Kippwinkel α kann eine Optimierung der Bildfeldgröße und der Messzeit erfolgen.

In dem Ausführungsbeispiel der Fig. 2 sind insgesamt drei verschiedene Messpunkte 15 angegeben, wobei beim linken Messpunkt 15 ein sehr kleiner erster Messkreis 12 vorhanden ist, der vollständig im Fächerstrahl 3 liegt, so dass eine Fächerstrahl-Tomographie durchgeführt werden kann. Der zweite Messkreis 13 ist bedeutend größer als der erste Messkreis 12 und kann auf der Messlinie 9 an keiner Stelle positioniert werden, die eine vollständige Überdeckung vom Fächerstrahl 3 möglich macht. Er ist deswegen so nah wie möglich an den Detektor 4 herangezogen und es muss hier eine Teilfächer-Tomographie durchgeführt werden. Der dritte Messpunkt 15 mit einem mittelgroßen dritten Messkreis 14 ist gerade so groß, dass - bei einem ausreichenden Abstand zum Detektor 4 - er sowohl innerhalb des ersten Randstrahls 7 als auch des zweiten Randstrahls 8 liegt. Dadurch ist für ihn (wie für den ersten Messkreis 12) eine Fächerstrahl-Tomographie durchführbar.

Auch bei dieser Vorrichtung erfolgt lediglich eine kontinuierliche Bewegung mit einem Freiheitsgrad entlang der Messlinie 9; bei diskreten Messpunkten 15 ist nur ein Festlegen an diesen möglich. Es ist keine lineare Scanachse nötig und damit ist eine Vereinfachung in der mechanischen Ausführungsform gegeben. Auch bei dieser Vorrichtung ist eine Optimierung der Abbildungsverhältnisse hinsichtlich der Auflösung - wie oben beschrieben - möglich, so dass ein kleines Objekt sowohl bei geringer Vergrößerung im gesamten Fächerstrahl 3 als auch mit hoher Vergrößerung mit dem Teilfächerverfahren tomographiert werden kann.

Insgesamt erhält man bei einer Ausführungsform gemäß Fig. 2 eine optimierte Geometrie mit einer maximalen Zeilenlänge bei voller Nutzung des Ausstrahlwinkels der Röntgenröhre 1, wobei allerdings eine geometrische Korrektur nötig ist.

Im Endeffekt werden durch beide Ausführungsbeispiele folgende Vorteile erzielt: Es ist eine Reduzierung der Länge des Detektors 4 bezogen auf den größten erzielbaren Messkreis 12, 13, 14 möglich, wodurch die Kosten der Vorrichtung verringert werden. Darüber hinaus können sowohl der Abstand zwischen Fokus 2 und Detektor 4 verringert werden - was zu einer Verkürzung der Messzeit führt - als auch eine Reduktion der Baugröße der Anlage erzielt werden - was zu einer Reduktion der Kosten für die Anlage führt. Aufgrund der geringeren Baugröße kann auch das Strahlenschutzgehäuse verkleinert werden, wodurch wiederum Kosten eingespart werden.

### Bezugszeichenliste

- 1: Röntgenröhre
- 2: Fokus
- 3: Fächerstrahl
- 4: Detektor
- 5: Rotationsachse
- 6: Zentralachse
- 7: Erster Randstrahl
- 8: Zweiter Randstrahl
- 9: Messlinie
- 10: Rotation
- 11: Rand des Detektors
- 12: Erster Messkreis
- 13: Zweiter Messkreis
- 14: Dritter Messkreis
- 15: Messpunkt

- α: Kippwinkel

## Patentansprüche

1. Röntgen-CT-Prüfanlage mit einer Röntgenröhre (1) mit einem Fokus (2), die einen Fächerstrahl (3) oder einen Kegelstrahl erzeugt, der einen Detektor (4) in einem definierten Abstand zum Fokus (2) vollständig ausleuchtet, und mit einem Prüfschlitten zur Aufnahme eines zu prüfenden Objekts, der eine senkrecht zur Ebene des Fächerstrahles (3) bzw. zur Zentralachse (6) des Kegelstrahls rotierbare Rotationsachse (5) aufweist,
**dadurch gekennzeichnet, dass**
der Prüfschlitten an mindestens einem Messpunkt (15) festlegbar ist, wobei jeder dieser Messpunkte (15) so angeordnet ist, dass sich die Rotationsachse (5) auf einer Messlinie (9) befindet, die vom Fokus (2) ausgeht und einen Kippwinkel (α) mit der Zentralachse (6) des Fächerstrahls (3) bzw. des Kegelstrahls einschließt.

2. Röntgen-CT-Prüfanlage nach Patentanspruch 1, **dadurch gekennzeichnet, dass** der Kippwinkel (α) zwischen 5° und 40°, insbesondere 15°, beträgt.

3. Röntgen-CT-Prüfanlage nach einem der vorstehenden Patentansprüche, **dadurch gekennzeichnet, dass** die Messlinie (9) senkrecht auf die Oberfläche des Detektors (4) steht.

4. Röntgen-CT-Prüfanlage nach Patentanspruch 3, **dadurch gekennzeichnet, dass** der Detektor (4) mit einer Antriebseinheit verbunden ist und senkrecht zur Messlinie (9) innerhalb der Ebene des Fächerstrahls (3) bzw. innerhalb der Ebene des Detektors (4) bei einem Kegelstrahl verschiebbar ist.

5. Röntgen-CT-Prüfanlage nach Patentanspruch 4, **dadurch gekennzeichnet, dass** die Zentralachse (6) den synthetisierten Detektor, der sich aus den extremen Stellungen aufgrund seiner Bewegung ergibt, zentral trifft.

6. Röntgen-CT-Prüfanlage nach Patentanspruch 1 oder 2, **dadurch gekennzeichnet, dass** die Zentralachse (6) des Fächerstrahls (3) bzw. des Kegelstrahls senkrecht auf die Oberfläche des Detektors (4) steht.

7. Röntgen-CT-Prüfanlage nach einem der vorstehenden Patentansprüche, **dadurch gekennzeichnet, dass** der Prüfschlitten kontinuierlich an Messpunkten (15) auf der Messlinie (9) festlegbar ist.

8. Röntgen-CT-Prüfanlage nach einem der vorstehenden Patentansprüche, **dadurch gekennzeichnet, dass** die Messlinie (9) körperlich durch eine Führungsschiene realisiert ist, an der der Prüfschlitten verfahrbar ist.

9. Röntgen-CT-Prüfanlage nach einem der vorstehenden Patentansprüche, **dadurch gekennzeichnet, dass** in jedem Messpunkt (15) eine freie Rotation (10) des Prüfschlittens mit darauf befestigtem, zu prüfendem Objekt gegeben ist.

10. Röntgen-CT-Prüfanlage nach einem der vorstehenden Patentansprüche, **dadurch gekennzeichnet, dass** in jedem Messpunkt (15) bei der Rotation (10) des Objekts dieses immer innerhalb eines Randstrahls (7, 8) bleibt, der vom Fokus (2) ausgeht und den Detektor (4) an seinem Rand (11) trifft.

11. CT-Verfahren zur Prüfung von Objekten unterschiedlicher Größe mittels einer Röntgen-CT-Prüfanlage nach einem der Patentansprüche 1 bis 10, **dadurch gekennzeichnet, dass** die Positionierung des Objekts von seiner Größe abhängt und das Objekt nach der Positionierung zur Prüfung um die Rotationsachse (5) des Prüfschlittens rotiert wird, wobei die Rotationsachse (5) bei ersten Objekten, deren Größe so klein ist, dass sie bei der Rotation um die Rotationsachse (5) vollständig vom Fächerstrahl (3) bzw. Kegelstrahl erfasst werden, möglichst nahe am Fokus (2) positioniert wird; die Rotationsachse (5) bei größeren zweiten Objekten möglichst nahe am Detektor (4) positioniert wird, wobei der Abstand der Rotationsachse (5) vom Fokus (2) so groß gewählt wird, dass das zweite Objekt bei der Rotation um die Rotationsachse (5) niemals über die beiden Randstrahlen (7, 8) hinaussteht.

12. CT-Verfahren nach Patentanspruch 11, **dadurch gekennzeichnet, dass** ein erstes Objekt so weit vom Fokus (2) entfernt auf der Messlinie (9) zur Prüfung angeordnet ist, dass es bei der gesamten Prüfung gerade nicht über den Fächerstrahl (3) bzw. den Kegelmantelstrahl hinaussteht.

13. CT-Verfahren nach einem der Patentansprüche 11 oder 12 **dadurch gekennzeichnet, dass** ein zweites Objekt so weit vom Fokus (2) entfernt auf der Messlinie (9) zur Prüfung angeordnet ist, dass es bei der gesamten Prüfung gerade nicht über die beiden Randstrahlen (7, 8) hinaussteht.

14. CT-Verfahren nach einem der Patentansprüche 11 bis 13 **dadurch gekennzeichnet, dass** der Detektor (4) mittels der Antriebseinheit während der Messung von seiner einen Extremposition in seine andere Extremposition, bzw. in seine anderen Extrempositionen, verfahren wird.
